# EUROPEAN PATENT SPECIFICATION

(11) **EP 2 395 530 B1**
(45) Date of publication and mention of the grant of the patent: **14.10.2015**
(21) Application number: 10165482.0
(22) Date of filing: 10.06.2010
(51) Int. Cl.: H01H 13/704, H01H 13/88, H01Q 1/24, H04M 1/23

(54) **Keypad stiffener and method of manufacture**
Tastaturversteifer und Herstellungsverfahren
Renfort pour clavier et procédé de fabrication

(43) Date of publication of application: 14.12.2011
(73) Proprietor: BlackBerry Limited, Waterloo, ON N2K 0A7 (CA)
(72) Inventor: Chen, Chao, Waterloo Ontario N2L 3W8 (CA); Welker, Michael, Waterloo Ontario N2L 3W8 (CA)
(74) Representative: Moore, Barry

(56) References cited:
- EP-A1- 1 986 205
- JP-A- 7 307 779
- US-A- 4 611 261
- US-A- 4 681 987

## Description

The field of the invention relates generally to stiffeners used in reinforcing circuit boards on which buttons and other similar input switches are mounted. This invention relates more specifically, but by no means exclusively, to keypad stiffeners for communications devices.

It is common for a metal keypad stiffener to be used in a mobile communications device to provide physical support for key or button components requiring repeated movement. However, a metal keypad stiffener can interfere with the electromagnetic performance of the antenna of a communications device.

US-A-4611261 discloses electronic equipment comprising key input means having a plurality of key input areas, a frame member for sandwiching a metal plate therein, and printed circuit means having a key input circuit adapted to be closed by a depression force from the key input area and having an electronic part connected thereto. The key input means covers an upper surface of the frame member. The frame member has convey means for conveying the depression force from the key input area to the printed circuit means.

US-A-4681987 discloses electronic equipment having a key input function comprising a circuit structure having an electrical circuit including a plurality of key input contacts formed thereon, a frame arranged on the surface of the circuit structure, and key input buttons arranged one for each of the key input contacts. The frame has holes for each of the key input contacts, an insulative layer adjoining the electrical circuit and a metal layer which is in contact with the electrical circuit, which metal layer is exposed at the holes so that the key input buttons, which fit into the holes, selectively and electrically connect the key input contacts to the metal layer.

EP-A-1986205 discloses a communications device according to the preamble of claim 9 and a luminous switch using an inorganic EL material provided with a plurality of switch sections so as to reduce acoustic noise. The switch sections are provided with a plurality of protruding parts and a plurality of supporting sections formed on a surface of a structure; an elastic deformable conductor arranged to have a convex surface opposed the protruding parts; a wiring sheet for covering the conductor; a luminous sheet for covering the wiring sheet; and a plurality of switch button arranged above the luminous sheet.

### GENERAL

In one broad aspect, the invention relates to a method according to claim 1. The method comprises a) forming a metal plate form comprising a metal grounding plate, at least one detachable island and at least one bridge, wherein the at least one bridge mechanically connects the metal grounding plate to the at least one detachable island; b) forming a non-conductive molding mechanically coupling the metal grounding plate and the at least one detachable island; and c) electrically disconnecting the detachable island from the metal grounding plate.

In a preferred embodiment, the electrically disconnecting may comprise removing the bridge. In some instances, at least a portion of the bridge may be removed. In other instances, all of the bridge may be removed.

In a further aspect, subsequent to the electrically disconnecting, the at least one detachable island may be electrically floating with respect to the metal grounding plate.

In a preferred embodiment, the metal plate form may comprise a plurality of detachable islands and a plurality of bridges. The bridges may mechanically connect each detachable island to the metal grounding plate. The non-conductive molding may mechanically couple each detachable island to the metal grounding plate. In some instances, each detachable island may be mechanically connected to the metal grounding plate directly via at least one of the bridges. In some instances, at least one detachable island may be mechanically connected to the metal grounding plate indirectly via daisy chaining. In some instances, two detachable islands may be mechanically connected to each other via at least one bridge.

In a preferred embodiment, the forming of the metal plate form may comprise using a metal stamping process. In some instances, the metal plate form comprises a single piece of metal.

In a preferred embodiment, the electrically disconnecting may comprise using a metal punching process.

In a preferred embodiment, the metal plate form may comprise a metal selected from the group consisting of: stainless steel, copper, tin, and aluminum.

In a preferred embodiment, the non-conductive molding may comprise a plastic. The plastic may be selected from the group consisting of: phenol formaldehyde resin, polyethylene, polystyrene, nylon, and polycarbonate.

In another broad aspect, the invention relates to a communications device according to claim 9.

The communications device comprises: a) an antenna; b) a printed circuit board comprising a main section and at least one periphery key switch; and c) a keypad stiffener adjacent the antenna, wherein the printed circuit board overlays the keypad stiffener. The keypad stiffener may include: i) a metal grounding plate positioned under the main section; and ii) at least one metal island positioned under the at least one periphery key switch, wherein the at least one metal island is positioned between the metal grounding plate and the antenna and wherein the at least one metal island is electrically floating with respect to the metal grounding plate.

In a preferred embodiment, the communications device may comprise a non-conductive molding mechanically coupling the metal grounding plate and the at least one metal island. In some instances, the non-conductive molding comprises a plastic.

In a preferred embodiment, the keypad stiffener may further comprise a non-conductive molding mechanically coupling a plurality of metal islands together.

These and other aspects and features of various embodiments will be described in greater detail below.

Some embodiments of the systems and methods described herein make reference to a mobile device. A mobile device may be a two-way communication device with advanced data communication capabilities having the capability to communicate with other computer systems. A mobile device may also comprise the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities), for example. A mobile device may communicate with other devices through a network of transceiver stations.

### Brief Description of the Drawings

Embodiments are described in further detail below, by way of example only, with reference to the accompanying drawings, in which:
FIG. 1 is a block diagram of a mobile device in one example implementation;
FIG. 2 is a block diagram of a communication subsystem component of the mobile device of FIG. 1;
FIG. 3 is a schematic diagram of a prior art keypad stiffener with a printed circuit board overlay;
FIG. 4A is a schematic diagram of a keypad stiffener configuration for a communication device in accordance with an example embodiment;
FIG. 4B is a schematic diagram of a keypad system configuration for a mobile device in accordance with an example embodiment;
FIG. 5 is a logical flow diagram of a method of manufacture of a keypad stiffener;
FIG. 6A is a top view schematic diagram of a metal grounding plate in accordance with an example embodiment;
FIG. 6B is a top view schematic diagram of a metal grounding plate in accordance with another example embodiment;
FIG. 7A is a top view schematic diagram of a metal grounding plate with a non-conductive molding in accordance with an example embodiment;
FIG. 7B is a bottom view schematic diagram of a metal grounding plate with a non-conductive molding in accordance with an example embodiment;
FIG. 8A is a top view schematic diagram of a keypad stiffener in accordance with an example embodiment;
FIG. 8B is a bottom view schematic diagram of a keypad stiffener in accordance with an example embodiment; and
FIG. 9 is a logical flow diagram of an alternate method of manufacture of a keypad.

### Description of Preferred Embodiments

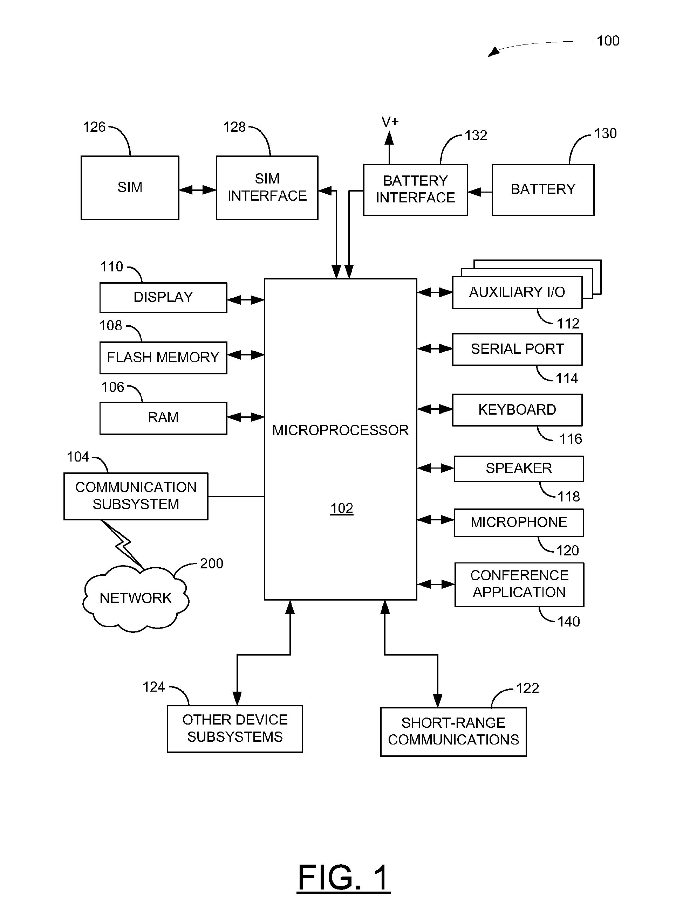

To aid the reader in understanding the structure of a mobile device and how it communicates with other devices, reference is made to FIGS. 1 through 2.

Referring first to FIG. 1, a block diagram of a mobile device in one example implementation is shown generally as 100. Mobile device 100 comprises a number of components, the controlling component being microprocessor 102. Microprocessor 102 controls the overall operation of mobile device 100. Communication functions, including data and voice communications, may be performed through communication subsystem 104. Communication subsystem 104 may be configured to receive messages from and send messages to a wireless network 200. In one example implementation of mobile device 100, communication subsystem 104 may be configured in accordance with the Global System for Mobile Communication (GSM) and General Packet Radio Services (GPRS) standards. The GSM/GPRS wireless network is used worldwide and it is expected that these standards may be supplemented or superseded eventually by Enhanced Data GSM Environment (EDGE) and Universal Mobile Telecommunications Service (UMTS), and Ultra Mobile Broadband (UMB), etc. New standards are still being defined, but it is believed that they will have similarities to the network behaviour described herein, and it will also be understood by persons skilled in the art that the embodiments of the present disclosure are intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks like EDGE and UMTS. Some older examples of data-centric networks include the Mobitex^{™} Radio Network and the DataTAC^{™} Radio Network. Examples of older voice-centric data networks include Personal Communication Systems (PCS) networks like GSM and Time Division Multiple Access (TDMA) systems. Other network communication technologies that may be employed include, for example, Integrated Digital Enhanced Network (iDEN™), Evolution-Data Optimized (EV-DO), and High Speed Packet Access (HSPA), etc.

Microprocessor 102 may also interact with additional subsystems such as a Random Access Memory (RAM) 106, flash memory 108, display 110, auxiliary input/output (I/O) subsystem 112, serial port 114, keyboard 116, speaker 118, microphone 120, short-range communications subsystem 122 and other device subsystems 124.

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, as well as device-resident functions such as a calculator or task list. Operating system software used by microprocessor 102 is typically stored in a persistent store such as flash memory 108, which may alternatively be a read-only memory (ROM) or similar storage element (not shown). Those skilled in the art will appreciate that the operating system, specific device applications, or parts thereof, may be temporarily loaded into a volatile store such as RAM 106.

Mobile device 100 may send and receive communication signals over network 200 after network registration or activation procedures have been completed. Network access may be associated with a subscriber or user of a mobile device 100. To identify a subscriber, mobile device 100 may provide for a Subscriber Identity Module ("SIM") card 126 to be inserted in a SIM interface 128 in order to communicate with a network. SIM 126 may be one example type of a conventional "smart card" used to identify a subscriber of mobile device 100 and to personalize the mobile device 100, among other things. Without SIM 126, mobile device 100 may not be fully operational for communication with network 200. By inserting SIM 126 into SIM interface 128, a subscriber may access all subscribed services. Services may include, without limitation: web browsing and messaging such as e-mail, voice mail, Short Message Service (SMS), and Multimedia Messaging Services (MMS). More advanced services may include, without limitation: point of sale, field service and sales force automation. SIM 126 may include a processor and memory for storing information. Once SIM 126 is inserted in SIM interface 128, it may be coupled to microprocessor 102. In order to identify the subscriber, SIM 126 may contain some user parameters such as an International Mobile Subscriber Identity (IMSI). By using SIM 126, a subscriber may not necessarily be bound by any single physical mobile device. SIM 126 may store additional subscriber information for a mobile device as well, including datebook (or calendar) information and recent call information.

Mobile device 100 may be a battery-powered device and may comprise a battery interface 132 for receiving one or more rechargeable batteries 130. Battery interface 132 may be coupled to a regulator (not shown), which assists battery 130 in providing power V+ to mobile device 100. Although current technology makes use of a battery, future technologies such as micro fuel cells may provide power to mobile device 100. In some embodiments, mobile device 100 may be solar-powered.

Microprocessor 102, in addition to its operating system functions, enables execution of software applications on mobile device 100. A set of applications that control basic device operations, including data and voice communication applications, may be installed on mobile device 100 during its manufacture. Another application that may be loaded onto mobile device 100 is a personal information manager (PIM). A PIM has functionality to organize and manage data items of interest to a subscriber, such as, but not limited to, e-mail, calendar events, voice mails, appointments, and task items. A PIM application has the ability to send and receive data items via wireless network 200. PIM data items may be seamlessly integrated, synchronized, and updated via wireless network 200 with the mobile device subscriber's corresponding data items stored and/or associated with a host computer system. This functionality may create a mirrored host computer on mobile device 100 with respect to such items. This can be particularly advantageous where the host computer system is the mobile device subscriber's office computer system.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Serial port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 provides for communication between mobile device 100 and different systems or devices, without the use of network 200. For example, subsystem 122 may include an infrared device and associated circuits and components for short-range communication. Examples of short range communication include standards developed by the Infrared Data Association (IrDA), Bluetooth^{®}, and the 802.11 family of standards (Wi-Fi^{®}) developed by IEEE.

In use, a received signal such as a text message, an e-mail message, or web page download is processed by communication subsystem 104 and input to microprocessor 102. Microprocessor 102 then processes the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112. Auxiliary subsystem 112 may include devices such as: a touch screen, mouse, track ball, infrared fingerprint detector, or a roller wheel with dynamic button pressing capability. Keyboard 116 may comprise an alphanumeric keyboard and/or telephone-type keypad, for example. A composed item may be transmitted over network 200 through communication subsystem 104.

For voice communications, the overall operation of mobile device 100 may be substantially similar, except that the received signals may be processed and output to speaker 118, and signals for transmission may be generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

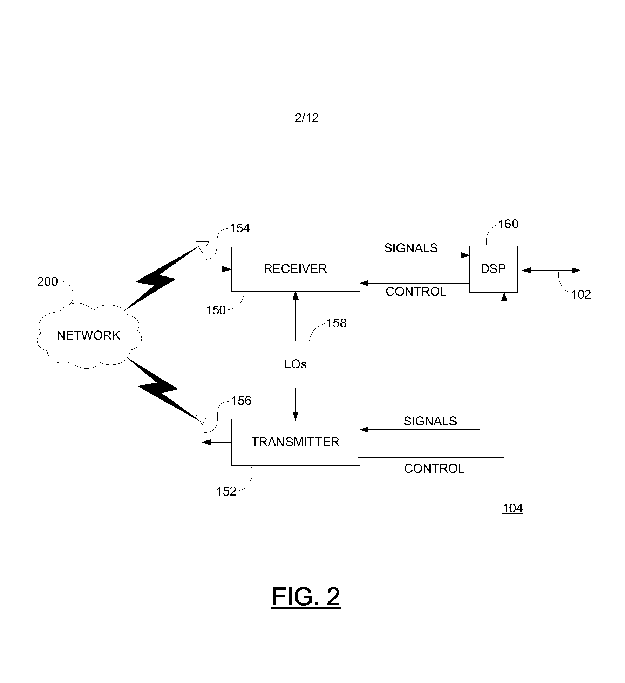

Referring now to FIG. 2, a block diagram of the communication subsystem component 104 of FIG. 1 is shown. Communication subsystem 104 may comprise a receiver 150, a transmitter 152, one or more embedded or internal antenna elements 154, 156, Local Oscillators (LOs) 158, and a processing module such as a Digital Signal Processor (DSP) 160.

The particular design of communication subsystem 104 is dependent upon the network 200 in which mobile device 100 is intended to operate; thus, it should be understood that the design illustrated in FIG. 2 serves only as one example. Signals received by antenna 154 through network 200 are input to receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is generally a limited resource, typically due to limits in overall bandwidth and limited battery power of mobile device 100.

When mobile device 100 is fully operational, transmitter 152 may be typically keyed or turned on only when it is sending to network 200 and may otherwise be turned off to conserve resources. Similarly, receiver 150 may be periodically turned off to conserve power until it is needed to receive signals or information (if at all) during designated time periods.

Generally speaking, embodiments described herein are directed towards keypad stiffeners that allow an antenna of a mobile device to be placed close to the stiffener assembly without unduly impeding the RF performance of the communication subsystem. Metal keypad stiffeners are generally known in the art to provide structural support for an overlaying printed circuit board and corresponding keypad. This support may allow the mobile device to meet certain mechanical requirements, such as minimum number of key presses, for example.

Because a keypad stiffener is typically made of a single piece of metal, a keypad stiffener may interfere with the communication subsystem due to known properties of electromagnetic interference. When connected to the reference ground of the mobile device, the antenna of the mobile must be located a sufficient distance away to ensure suitable RF performance.

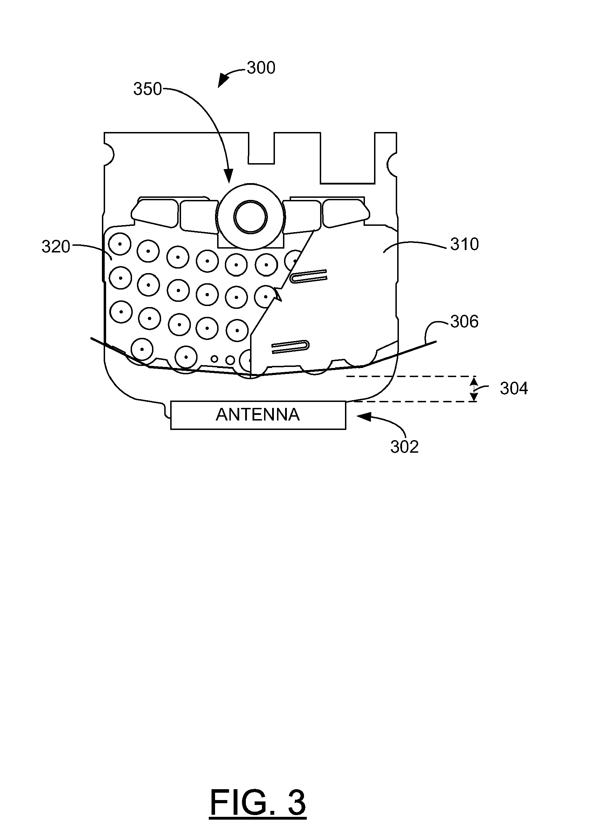

FIG. 3 is a schematic diagram of a prior art keypad system configuration 300 as might be included within the housing of a communications device 100. Some of the components in FIG. 3 are partially cutaway or transparent for illustrative purposes. The prior art keypad system configuration 300 includes an antenna 302 (represented schematically), a metal keypad stiffener 310, and a printed circuit board 320 (shown partially cutaway). The antenna 302 is positioned at the bottom of the prior art keypad system configuration 300. The printed circuit board 320 is positioned over the grounded keypad stiffener 310. Prior art keypad system configuration 300 may also include auxiliary inputs 350, such as a trackball, soft keys and the like. Auxiliary inputs 350 may form part of the auxiliary I/O subsystem 112.

Prior art keypad system configurations 300 are designed with a grounded keypad stiffener 310 formed of a single piece of conductive metal.

As known by skilled persons in the art, the radio frequency (RF) performance of the mobile device 100 will be impeded if the antenna 302 is located too close to the grounded keypad stiffener 310. Conversely, increasing the distance between the antenna 302 and the keypad stiffener 310 to improve RF performance increases the size or length of the mobile device.

An equivalent grounding line 306 (corresponding to keypad stiffener 310) is an imaginary line that indicates where the grounded metal conductor begins. The equivalent grounding line 306 is determined by the bottom edge of the grounded stiffener 310. The equivalent grounding line 306 is represented by a reference line used to measure the distance 304 between the grounded keypad stiffener 310 and the antenna 306. The distance 304 may correspond to the shortest displacement between the antenna 302 and the RF interference attributed to the grounded keypad stiffener 310. The distance 304 between the equivalent grounding line 306 and the antenna 302 may be designed to balance the electromagnetic interference between the antenna 302 and the keypad stiffener 310 with a corresponding increase in the length of the mobile device 100.

Design specifications and/or functional requirements typically require mobile communications devices 100 to maintain a minimum distance (e.g., 10-15mm) between the grounded keypad stiffener 310 and the antenna 302 to achieve satisfactory RF communication performance. To meet this distance requirement, prior art keypad system configurations 300 typically extend the chin (or the bottom) of the mobile device (below the keypad) to accommodate.

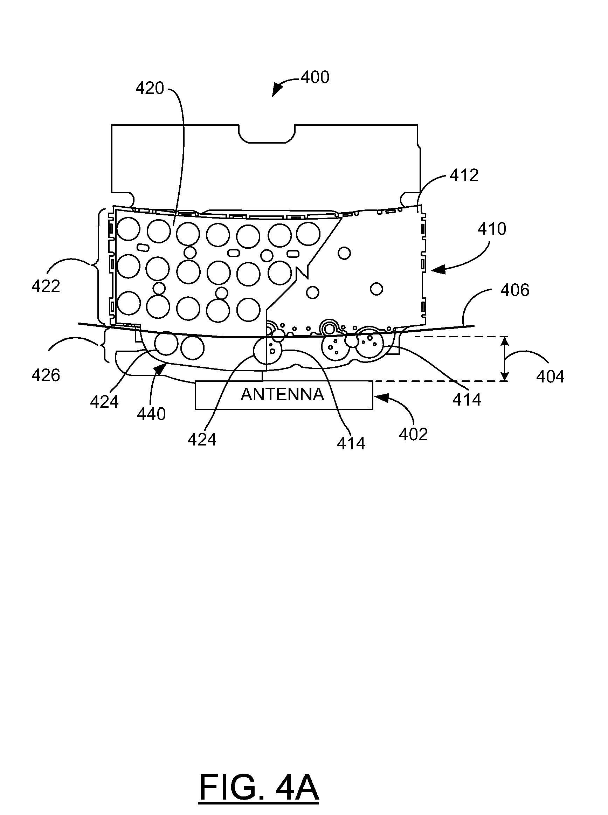

Referring now to FIG. 4A, a schematic diagram of a keypad stiffener configuration for a communications device 100 is shown generally as 400 in accordance with an example embodiment of the present application. The keypad system configuration 400 may include an antenna 402 (represented in schematic form), a printed circuit board 420, and a keypad stiffener 410. The printed circuit board 420 is shown as a partial cutout to illustrate that the printed circuit board 420 may overlay the keypad stiffener 410.

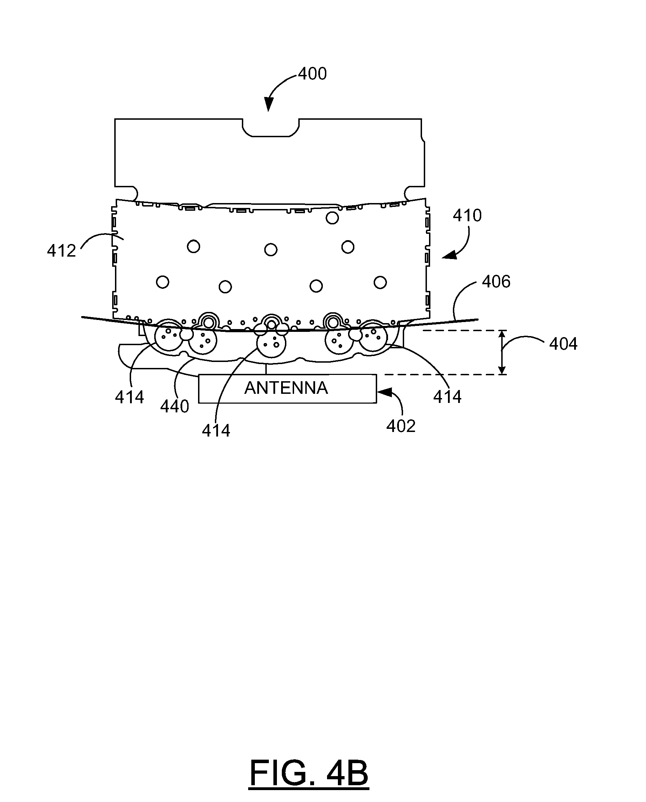

The antenna 402 may be positioned at an end of the mobile device 100. Referring to FIG. 4A and FIG. 4B, the antenna 402 may be positioned horizontally along the bottom of the mobile device 100. Positioning the antenna 402 at the bottom of the mobile device 100 places the radiating elements (i.e., antenna 402) furthest from the sensitive areas of the user's head (e.g., brain). This may make it easier for phone manufacturers to comply with applicable specific absorption rate (SAR) requirements. The farther the radiating element of the cell phone antenna system is from the user and especially from the user's sensitive areas, the less intense is the radiation received by the user.

The printed circuit board (PCB) 420 may include a flexible printed circuit, also known as an FPC. For example, the PCB 420 may correspond to a flexible printed circuit of a keypad (or keyboard 116) in a mobile device 100.

The PCB 420 may be generally divided to include a main section 422 and at least one periphery key switch 424. The periphery key switch 424 may be a circuit or a switch on the PCB 420 corresponding to a space bar, a shift key and the like, as may be positioned at a periphery such as at the bottom of a keypad. It should be understood that there may be one or a plurality of periphery key switches 424. Furthermore, a plurality of periphery keys may generally correspond to the bottom row of keys 426 of a keypad.

The main section 422 of the PCB 420 may generally correspond to the remainder and typically main portion of the PCB 420 (excluding the periphery key switch(es) 424 or bottom row of keys 426). The main section 422 may include key switches corresponding to keys on a keypad (e.g., the alphanumeric keys in the upper main portion of a keypad).

The keypad stiffener 410 may be positioned adjacent to the antenna 402. The keypad stiffener 410 may include a metal grounding plate 412 positioned under the main section 422 of the PCB.

In some embodiments, the metal grounding plate may be positioned under the display 110. Furthermore, the display 110 may be a touch screen. In such embodiments, the PCB 420 may include only the periphery key switch(es) 424.

The keypad stiffener 410 may also include a metal island 414 positioned under the periphery key switch 424 of the PCB. The metal island 414 may be positioned between the metal grounding plate 412 and the antenna 402. Furthermore, whereas the metal grounding plate 412 may be grounded or otherwise connected to a common reference ground, the metal island 414 may be electrically floating (e.g., electrically isolated) with respect to the metal grounding plate 412.

At a high level, the keypad system configuration 400 may allow the antenna 402 to be positioned closer to the keypad stiffener 410. As the metal island 414 may be electrically floating, the equivalent grounding line 406 may lay between the top of the metal island 414 and the bottom of the metal grounding plate 412. Detaching the metal island 414 may add the width of the metal island 414 to the distance 404 between the antenna 402 and the equivalent grounding line 406 with respect to existing prior art grounded keyboard stiffeners composed of a single piece of conductive metal. With reference to an overlaid keypad, this means that the equivalent grounding line 406 may lie between the bottom row of keys 426 and the second from the bottom row of keys.

In contrast, the equivalent grounding line 306 of the prior art (illustrated in FIG. 3) lies below the bottom row of keys on a keypad. This additional distance (relative to prior art configurations) may improve the RF performance of the communication subsystem 104. Alternatively, this shift in the equivalent grounding line 406 (relative to an equivalent grounding line 306 of the prior art) may allow the antenna 402 to be positioned closer to the keypad stiffener 410 (and the corresponding printed circuit board 420 and keypad) while maintaining a suitable distance 404 from the equivalent grounding line 406. Effectively, detaching the metal island(s) 414 from the metal grounding plate 412 allows the antenna 402 to be positioned closer to the bottom row of keys 426 on the keypad, without sacrificing RF performance. This may allow the mobile device 100 to reduce its length.

At the same time, the keypad stiffener 410 may be operable to maintain structural support to the PCB 420 to ensure that keypad is able to withstand design requirements. For example, the keypad (not shown), and the PCB 420 underneath, may be required to meet a minimum number of key presses (e.g., a million key presses). The metal grounding plate 412 and metal island(s) 414 of the keypad stiffener 410 may provide this structural support underneath the PCB 420.

Referring now to FIG. 4B, keypad system configuration 400 is shown without the PCB 420 overlay. To meet electrostatic discharge requirements and for proper radio frequency RF design, the metal grounding plate 412 of the keypad stiffener 410 is connected to a common reference ground. This places the metal grounding plate 412 at a fixed voltage potential (signal ground). The metal grounding plate 412 may be electrically connected to the signal ground of the main PCB. Similarly, the metal grounding plate 412 may be grounded to the metal support cans (not shown) of the main PCB.

Because the metal island 414 is floating, it does not behave as a signal ground. Therefore, the metal island 414 may not interfere with the communication subsystem 104. Accordingly, this additional distance between the antenna and the interfering object (e.g., the metal grounding plate 412) may improve the RF performance of the antenna 402 relative to prior art configurations.

As persons skilled in the art will appreciate, care must be taken to ensure that the size of the metal islands 414 do not get so large that they resonate and provide additional electromagnetic interference. However, if the metal islands 414 are properly designed, a metal island 414 will have minimal effect on the RF performance of the antenna 402.

As noted, in some embodiments there may be multiple metal islands 414. Each metal island 414 may be positioned under a periphery key switch 424 of the PCB 420. Furthermore, each metal island 414 may be electrically floating with respect to the metal grounding plate 412. Each metal island 414 may also be electrically floating with respect to one another. It should be understood that, collectively, the metal islands 414 should be configured to have a minimal effect on the RF performance of the antenna 402.

In some embodiments, a metal island(s) 414 may be held in place by a non-conductive molding 440. The non-conductive molding 440 may mechanically couple the metal island(s) 414 and the metal grounding plate 412. Accordingly, the non-conductive molding 440 may keep the metal island(s) 414 aligned under the corresponding periphery key switch(es) 424 to ensure it, or they, provide the necessary mechanical support for repeated key presses.

In alternate embodiments, a non-conductive molding 440 may mechanically couple two or more metal islands 414 together. For example, the non-conductive molding 440 may couple the metal islands 414 corresponding to the bottom row of keys 426. The non-conductive molding 440 containing or mechanically coupling the metal islands 414 may be separate from the metal grounding plate 412; in which case, the keypad stiffener may comprise two or more separate pieces.

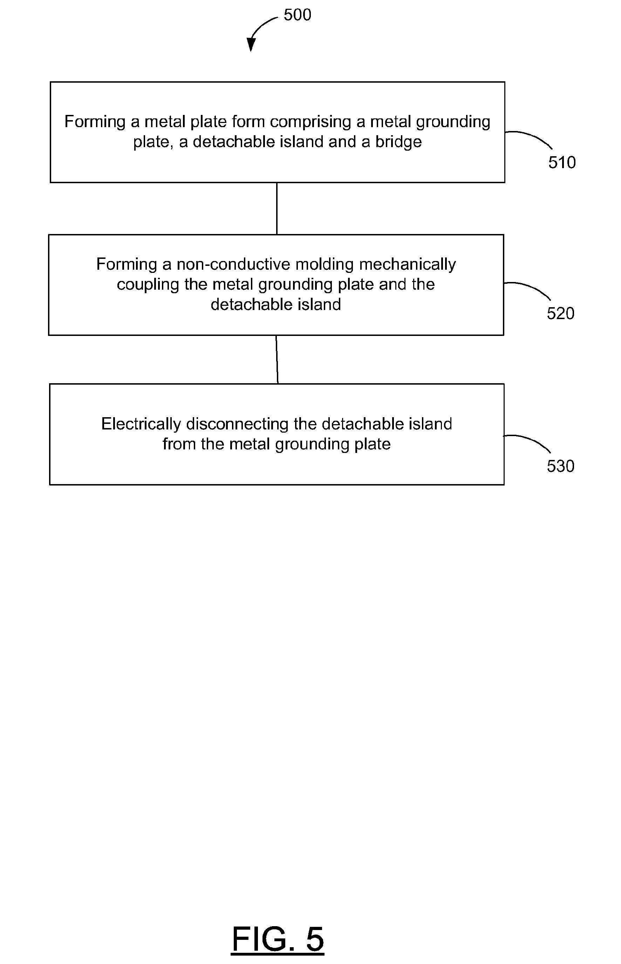

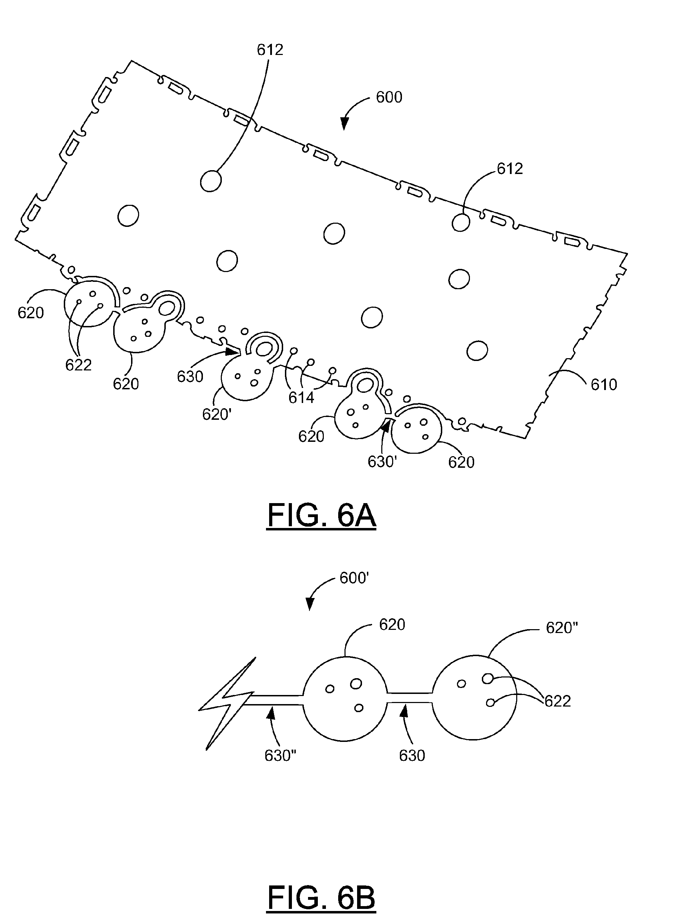

Reference will now be made to FIG. 5 through FIG. 8B in order to facilitate the description of a method 500 for manufacturing a keypad stiffener. In Block 510 of FIG. 5, the method of manufacture begins by forming a metal plate form 600. Referring now to FIG. 6A, the metal plate form 600 may include a metal grounding plate 610, one or more detachable islands 620 and one or more corresponding bridges 630. Each bridge 630 is initially constructed to mechanically connect the metal grounding plate 610 to a detachable island 620. Each bridge 630 may also provide an electrical connection between the metal grounding plate 610 and the detachable island 620.

The metal plate form 600 may be formed out of a conductive metal. For example, the metal plate form 600 may be formed of stainless steel (such as grade 304), copper, tin, aluminum and the like. A metal plate form 600 may include apertures 612, 614, 622 in the metal grounding plate 610 and detachable island(s) 620 of the metal plate form 600. The apertures 612, 614, 622 may be used as connectors. The apertures 612, 614, 622 may also be used to provide contact points or through holes for connections with other components. It should be appreciated that to approximate an unbroken conducting surface, any apertures 612, 614, 622 may be designed to be much smaller than the operating frequencies of the mobile device 100. If this condition is met, the metal plate form 600 may also act as an electromagnetic shield, shielding electromagnetic radiation occurring on one side of the metal plate form 600 from interfering with electronic components (not shown) on the other side of the metal plate form 600.

The metal plate form 600 may be formed using common tooling machinery. For example, the metal plate form 600 may be formed using a metal stamping process. A metal stamping process may incorporate an assembly line process for forming the metal plate form 600 en mass. In other embodiments, a die cutting process, a bending process, a blanking process, and/or a piercing process may be used. Alternative processes of forming the metal plate form 600 are possible, as other methods of manufacturing a metal plate form 600 will be known to one skilled in the art.

Referring again to FIG. 6A, the metal grounding plate 610, the detachable island 620 and the bridge 630 may be formed utilizing a single piece of sheet metal (not shown). The metal plate form 600 may include multiple detachable islands 620. Furthermore, a detachable island 620 may be mechanically connected to the metal grounding plate 610 by more than one bridge 630. In yet a further alternative, a detachable island 620 may be connected directly to the metal grounding plate 610 by a corresponding bridge 630, or indirectly by being connected to an adjacent detachable island 620 which in turn may be directly (or indirectly) connected to the metal grounding plate 610 by a bridge 630 (e.g., via daisy chaining).

Referring briefly to FIG. 6B, a schematic illustration depicting metal plate form 600' is shown incorporating daisy chaining. The daisy chain seen in FIG. 6B may form part of a larger metal plate form 600' as might be illustrated in FIG. 6A. The metal plate form 600' may comprise two detachable islands 620, 620" mechanically connected to each other in a daisy chain fashion via a bridge 630. The two detachable islands 620, 620" may be further connected to the rest of the metal plate form 600' via another bridge 630". The daisy chain may connect directly to the metal grounding plate 610 via the bridge 630". In such a configuration, a detachable island 620" may be connected indirectly to the grounding plate 610 via daisy chaining. Alternatively, the bridge 630" may connect to one or more additional detachable islands 620 (not shown).

Referring back to FIG. 6A, a bridge 630 may be formed using a thin piece of metal. In some embodiments, the bridges 630' may be grouped together such that two bridges 630' connecting two adjacent detachable islands 620 are co-located. Furthermore, it should be understood that a bridge may include any type of connection that allows a detachable island 620 to be mechanically connected to the metal grounding plate 610. In some embodiments, the bridge(s) 630 may be incorporated (in whole or in part) within either the detachable island(s) 620 or the metal grounding plate 610.

As noted, each detachable island 620 in the metal plate form 600 may correspond to a key (not shown). Hence, a key may ultimately overlay a detachable island 620. For example, the keys may correspond to the keys of a keypad (not shown). The five detachable islands 620 seen in FIG. 6 may correspond to five keys on a keypad of a mobile device. For example, the detachable island 620' may correspond to the space bar of a keypad. Furthermore, the detachable islands 620 may correspond to the keys of the bottom row of the keypad.

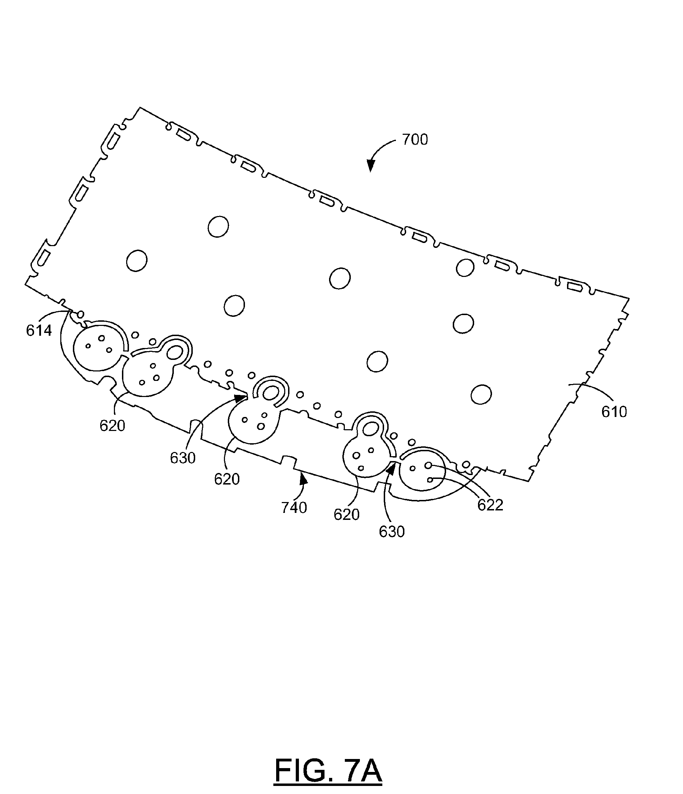

In Block 520, a non-conductive molding 740 (illustrated in FIG. 7A) is formed to mechanically couple the metal grounding plate 610 and the detachable island(s) 620. An injection molding process may be used. For example, the non-conductive molding 740 may be co-molded with the metal plate form 600. Co-molding may involve placing the metal plate form 600 into a mold and injecting a non-conductive material (not shown) to fill the mold. For example, a non-conductive material may include thermoplastics or thermosetting plastics such as acrylonitrile butadiene styrene (ABS), phenol formaldehyde resin, polyethylene, polystyrene, nylon, polycarbonate and the like. Other plastics may also be used. Furthermore, mixtures of non-conductive materials may be used.

Co-molding may provide additional strength to the non-conductive molding 740 by providing mechanical coupling between the non-conductive material and the metal plate form 600.

Referring now to FIG. 7A, a top view schematic diagram of a metal plate form 600 with a non-conductive molding 740 in accordance with an example embodiment is shown. The apertures 614, 622 may be used to further mechanically couple the detachable islands 620 to the metal grounding plate 610. If a co-molding process is utilized, the non-conductive material may be injected into the mold and forced into the apertures 614, 622. This may provide mechanical coupling between the non-conductive material and the metal grounding plate 610, and the non-conductive material and the detachable islands 620. Once formed, the non-conductive molding 740 may mechanically couple the detachable island(s) 620 in position relative to the metal grounding plate 610.

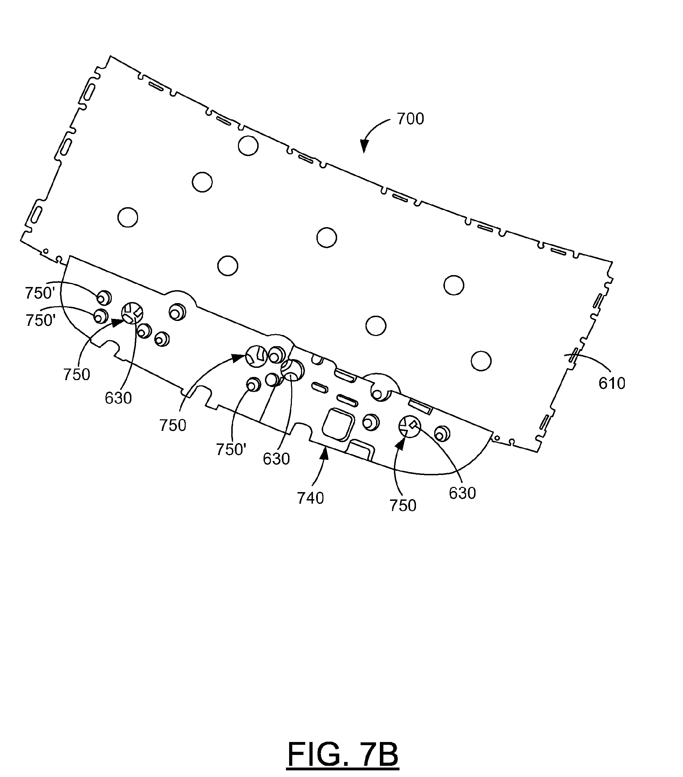

FIG. 7B is a bottom view schematic diagram of a metal plate form 600 with a non-conductive molding 740 in accordance with an example embodiment. In some embodiments, a guide 750, 750' may be formed as part of the injection co-molding process to keep the detachable island(s) 620 or the bridge(s) 630 in position within the mold (not shown). Furthermore, a guide 750 may overlay one or more of the bridges 630.

In Block 530, the detachable island 620 may be electrically disconnected from the metal grounding plate 610. For example, this may include removing or dislocating the bridge(s) 630 in whole or in part; or in other words, removing at least a portion of the bridge(s) 630. In another example, disconnecting the detachable islands 620 from the metal grounding plate 610 may include carving (or otherwise defining) the detachable islands 620 out of the metal plate form 600.

The bridge(s) 630 may be removed (in whole or in part) using a machinery tool, which may electrically disconnect the detachable island 620 from the metal grounding plate 610. For example, a metal stamping process and/or a metal punching process may be used to remove the bridges(s) 630 from the metal plate form 600. In other embodiments, a drill or a fixture may be used. A fixture may involve immobilizing the metal plate form 600. A punching function may be used to remove the bridge(s) 630 connecting the detachable island(s) 620 to the metal grounding plate 610. It should be understood that other methods of disconnecting and/or severing the detachable island(s) 620 from the metal grounding plate 610 are possible. The methods described should not be construed as limiting.

Once the corresponding bridge 630 is removed (in whole or in part), a detachable island 620 may no longer be in electrical contact with the metal grounding plate 610. Accordingly, subsequent to removing a bridge(s) 630, a detachable island(s) 620 may be electrically floating (e.g., electrically isolated) with respect to the metal grounding plate 610 and may now be referred to as a floating island(s) 620*.

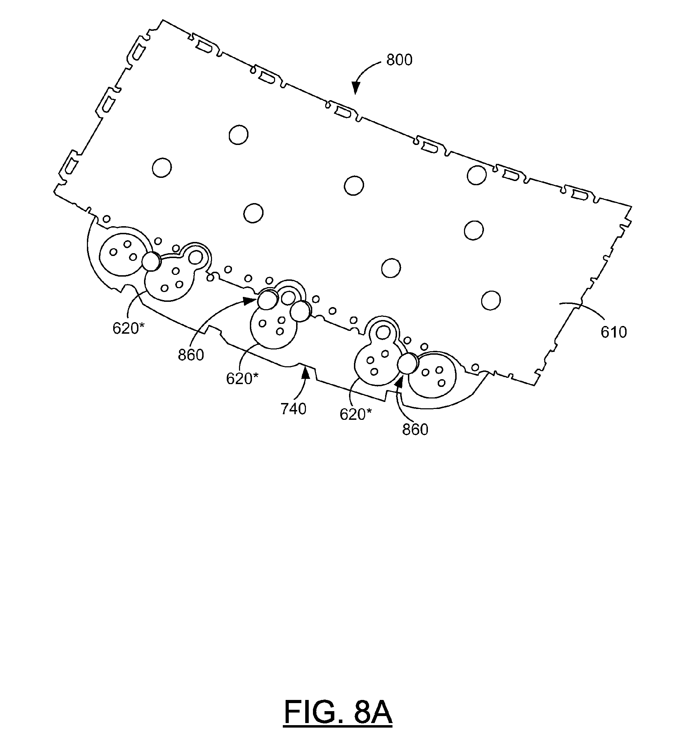

FIG. 8A is a top view schematic diagram of a keypad stiffener 800 in accordance with an example embodiment. The floating islands 620* may be electrically disconnected from the metal grounding plate 610 while being held in place by the non-conductive molding 740. The bridges 630 may be removed using a metal punching process leaving holes 860 in the keypad stiffener 800.

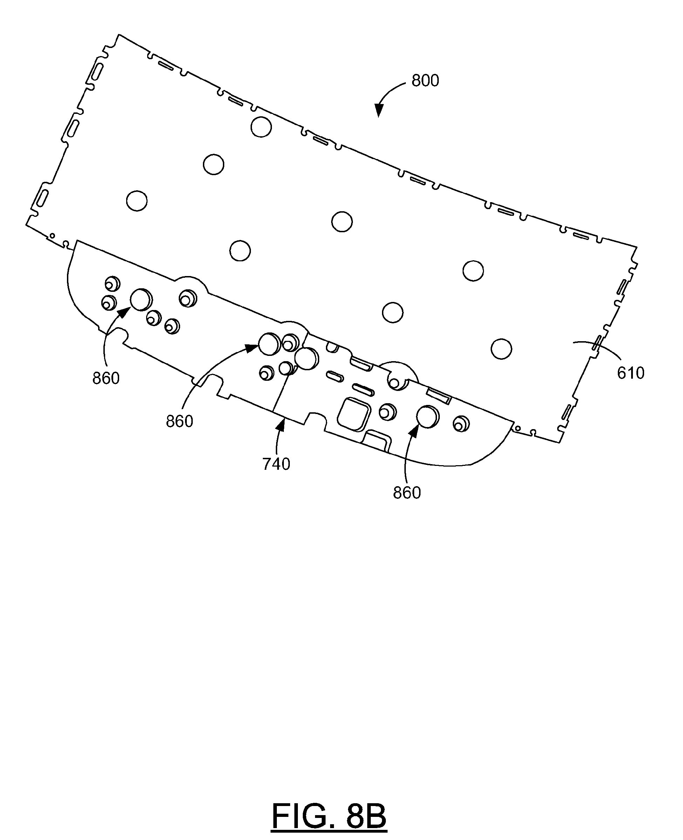

Referring now to FIG. 8B, a bottom view schematic diagram of a keypad stiffener 800 in accordance with an example embodiment is shown illustrating holes 860 in the keypad stiffener 800. In some embodiments, the guide(s) 750 may be used to aid in the removal of a bridge 630. For example, a guide 750 may be used to align the bridge 630 to be removed with the punching process.

As seen in FIG. 8A and FIG. 8B, the floating islands 620* are electrically floating (e.g., electrically isolated) with respect to the metal grounding plate 610. The floating islands 620* may also be electrically floating with respect to each other. When placed into a mobile device 100, the metal grounding plate 610 may be connected to a reference ground. Meanwhile, the floating islands 620* may remain electrically floating. Accordingly, the floating islands 620* may provide minimal interference with the electromagnetic radiation transmitted and received by the antenna 402, if the floating islands 620* are placed between the grounded metal grounding plate 610 and the antenna 402.

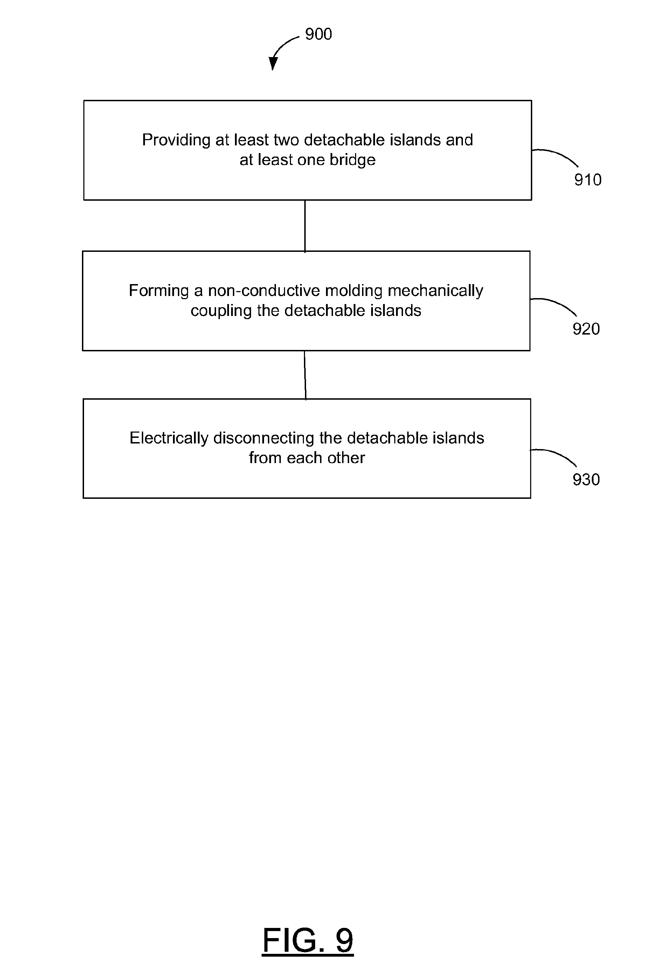

Reference will now be made briefly to FIG. 9 in order to facilitate the description of a method 900 for manufacturing a keypad stiffener in an alternative embodiment.

In Block 910, the method 900 of manufacture begins by providing two or more detachable islands 620 and one or more bridges 630. The detachable islands 620 and bridges 630 may be formed from a metal plate form, in some examples such as metal plate form 600' (as illustrated in FIG. 6B), using machinery tools as described above. Two of the detachable islands 620, 620" may be mechanically connected directly via a bridge 630. If there are more than two detachable islands 620, 620", bridges 630, 630" may mechanically connect the detachable islands 620, 620" to the rest of the metal plate form 600' indirectly via daisy chaining.

Referring again to FIG. 6B, in some embodiments a metal grounding plate 610 may be, but is not required to be, provided as part of the metal plate form (such as illustrated in metal plate form 600 of FIG. 6A). The detachable islands 620, 620" may be mechanically connected to the metal grounding plate 610 directly via the bridge 630". Furthermore, as described in relation to FIG. 6B, the detachable island 620" may be mechanically connected to the metal grounding plate 610 indirectly via daisy chaining (via bridge 630" and one or more additional detachable islands 620).

In Block 920, a non-conductive molding 740 (as illustrated in FIG. 7A) may be formed to mechanically couple two or more of the detachable islands 620 together. As described above, the non-conductive molding 740 may be formed using an injection molding process, a co-molding process and the like. In some embodiments, the non-conductive molding 740 may mechanically couple the two or more detachable islands 620 together, without mechanically coupling to a metal grounding plate 610. In alternative embodiments, a metal grounding plate may also be included and mechanically coupled to the detachable islands 620 using the non-conductive molding 740.

Finally, in Block 930, the detachable islands 620 may be electrically disconnected from each other. In some embodiments, the bridge(s) 630 is removed in whole or in part, which may electrically disconnect one detachable island 620 from another. As described above, a machinery tool (not shown) may remove at least a portion of the bridge(s) 630 to separate the detachable islands 620 from one another. Subsequent to the removal of the bridges 630, each of the islands may be electrically floating with respect to one another and may now be referred to as floating islands 620*.

In some embodiments, the non-conductive molding 740 containing the floating islands 620* may then be inserted into a communications device 100 as a separate piece of the keypad stiffener, with the floating islands 620* electrically floating from the metal grounding plate 610. In such embodiments, the metal grounding plate 610 may be inserted into the communications device 100 separately; in which case, the keypad stiffener may comprise two or more separate pieces.

If the non-conductive molding 740 in Block 920 included a metal grounding plate 610, then the floating islands 620* may also be electrically floating with respect to the metal grounding plate 610. The non-conductive molding 740 mechanically coupling the floating islands 620* to the metal grounding plate 610 may then be inserted into a communications device 100 to form part or all of the keypad stiffener 800.

The steps of a method in accordance with any of the embodiments described herein may not be required to be performed in any particular order, whether or not such steps are described in the claims or otherwise in numbered or lettered paragraphs.

The invention has been described with regard to a number of embodiments. However, it will be understood by persons skilled in the art that other variants and modifications may be made without departing from the scope of the invention as defined in the claims appended hereto.

## Claims

1. A method of manufacturing a communications device according to Claim 9, the method comprising the following steps for manufacturing a keypad stiffener (410, 800):
a) forming a metal plate form (600) comprising a metal grounding plate (610), at least one detachable island (620) and at least one bridge (630), wherein the at least one bridge (630) mechanically connects the metal grounding plate (610) to the at least one detachable island (620);
b) forming a non-conductive molding (740) mechanically coupling the metal grounding plate (610) and the at least one detachable island (620); and
c) electrically disconnecting the detachable island (620) from the metal grounding plate (610).

2. The method of claim 1, wherein the electrically disconnecting comprises removing the bridge (630).

3. The method of claim 1 or claim 2, wherein subsequent to the electrically disconnecting, the at least one detachable island (620) is electrically floating with respect to the metal grounding plate (610).

4. The method of any preceding claim, wherein the metal plate form (600) comprises a plurality of detachable islands (620) and a plurality of bridges (630), wherein the bridges (630) mechanically connect each detachable island (620) to the metal grounding plate (610), and wherein the non-conductive molding (740) mechanically couples each detachable island (620) to the metal grounding plate (610).

5. The method of claim 4, wherein each detachable island (620) is mechanically connected to the metal grounding plate (610) directly via at least one of the bridges (630).

6. The method of claim 4, wherein two detachable islands (620) are mechanically connected to each other via at least one bridge (630).

7. The method of any preceding claim, wherein the forming of the metal plate form (600) comprises using a metal stamping process.

8. The method of any preceding claim, wherein the electrically disconnecting comprises using a metal punching process.

9. A communications device (100) comprising:
a) an antenna (402);
b) a printed circuit board (420) comprising a main section (422) and at least one periphery key switch (424);
c) a keypad stiffener (410), wherein the printed circuit board (420) overlays the keypad stiffener (410), the keypad stiffener (410) comprising:
i) a metal grounding plate (412) positioned under the main section (422);
**characterized in that** the keypad stiffener (410) is adjacent the antenna (402), and **in that** it further comprises:
ii) at least one metal island (414) positioned under the at least one periphery key switch (424), wherein the at least one metal island (414) is positioned between the metal grounding plate (412) and the antenna (402);
wherein the at least one metal island (414) is electrically floating with respect to the metal grounding plate (412).

10. The communications device (100) of claim 9, further comprising a non-conductive molding (440) mechanically coupling the metal grounding plate (412) and the at least one metal island (414).

11. The communications device (100) of claim 9, further comprising a non-conductive molding (440) mechanically coupling a plurality of metal islands (414) together.

## Patentansprüche

1. Ein Verfahren zur Herstellung einer Kommunikationsvorrichtung gemäß Anspruch 9, wobei das Verfahren die folgenden Schritte zur Herstellung eines Tastaturversteifers (410, 800) aufweist:
a) Bilden einer Metallplattenform (600), die eine Metallerdungsplatte (610), zumindest eine entfernbare Insel (620) und zumindest eine Brücke (630) aufweist, wobei die zumindest eine Brücke (630) die Metallerdungsplatte (610) mechanisch mit der zumindest einen entfernbaren Insel (620) verbindet;
b) Bilden eines nichtleitenden Formteils (740), das die Metallerdungsplatte (610) und die zumindest eine entfernbare Insel (620) mechanisch koppelt; und
c) elektrisches Trennen der entfernbaren Insel (620) von der Metallerdungsplatte (610).

2. Das Verfahren gemäß Anspruch 1, wobei das elektrische Trennen ein Entfernen der Brücke (630) aufweist.

3. Das Verfahren gemäß Anspruch 1 oder Anspruch 2, wobei nachfolgend auf das elektrische Trennen die zumindest eine entfernbare Insel (620) elektrisch getrennt ist hinsichtlich der Metallerdungsplatte (610).

4. Das Verfahren gemäß einem vorhergehenden Anspruch, wobei die Metallplattenform (600) eine Vielzahl von entfernbaren Inseln (620) und eine Vielzahl von Brücken (630) aufweist, wobei die Brücken (630) mechanisch jede entfernbare Insel (620) mit der Metallerdungsplatte (610) verbinden, und wobei das nichtleitende Formteil (740) jede entfernbare Insel (620) mechanisch mit der Metallerdungsplatte (610) koppelt.

5. Das Verfahren gemäß Anspruch 4, wobei jede entfernbare Insel (620) mechanisch mit der Metallerdungsplatte (610) direkt über zumindest eine der Brücken (630) verbunden ist.

6. Das Verfahren gemäß Anspruch 4, wobei zwei entfernbare Inseln (620) mechanisch über zumindest eine Brücke (630) miteinander verbunden sind.

7. Das Verfahren gemäß einem vorhergehenden Anspruch, wobei das Bilden der Metallplattenform (600) ein Verwenden eines Blechpressprozesses aufweist.

8. Das Verfahren gemäß einem vorhergehenden Anspruch, wobei das elektrische Trennen ein Verwenden eines Blechstanzprozesses aufweist.

9. Eine Kommunikationsvorrichtung (100), die aufweist:
a) eine Antenne (402);
b) eine Leiterplatte (420), die einen Hauptteil (422) und zumindest einen Peripherietastenschalter (424) aufweist;
c) einen Tastaturversteifer (410), wobei die Leiterplatte (420) über dem Tastaturversteifer (410) liegt, wobei der Tastaturversteifer (410) aufweist:
i) eine Metallerdungsplatte (412), die unter dem Hauptteil (422) positioniert ist;
**dadurch gekennzeichnet, dass** der Tastaturversteifer (410) angrenzend an die Antenne (402) ist, und dadurch, dass er weiter aufweist:
ii) zumindest eine Metallinsel (414), die unter dem zumindest einen Peripherietastenschalter (424) positioniert ist, wobei die zumindest eine Metallinsel (414) zwischen der Metallerdungsplatte (412) und der Antenne (402) positioniert ist;
wobei die zumindest eine Metallinsel (414) elektrisch getrennt ist hinsichtlich der Metallerdungsplatte (412).

10. Die Kommunikationsvorrichtung (100) gemäß Anspruch 9, die weiter ein nichtleitendes Formteil (440) aufweist, das die Metallerdungsplatte (412) und die zumindest eine Metallinsel (414) mechanisch koppelt.

11. Die Kommunikationsvorrichtung (100) gemäß Anspruch 9, die weiter ein nichtleitendes Formteil (440) aufweist, das eine Vielzahl von Metallinseln (414) mechanisch miteinander koppelt.

## Revendications

1. Procédé de fabrication d'un appareil de communication selon la revendication 9, le procédé comprenant les étapes suivantes, pour fabriquer un raidisseur de clavier (410, 800), consistant à :
a) réaliser un corps sous forme de plaque métallique (600) comprenant une plaque métallique de mise à la terre (610), au moins un îlot détachable (620) et au moins un pont (630), l'au moins un pont (630) raccordant mécaniquement la plaque métallique de mise à la terre (610) à l'au moins un îlot détachable (620) ;
b) réaliser un moulage non conducteur (740) accouplant mécaniquement la plaque métallique de mise à la terre (610) et l'au moins un îlot détachable (620) ; et
c) déconnecter électriquement l'îlot détachable (620) de la plaque métallique de mise à la terre (610).

2. Procédé selon la revendication 1, dans lequel la déconnexion électrique comprend l'enlèvement du pont (630).

3. Procédé selon la revendication 1 ou la revendication 2, dans lequel, après la déconnexion électrique, l'au moins un îlot détachable (620) flotte électriquement par rapport à la plaque métallique de mise à la terre (610).

4. Procédé selon l'une quelconque des revendications précédentes, dans lequel le corps sous forme de plaque métallique (600) comprend une pluralité d'îlots détachables (620) et une pluralité de ponts (630), les ponts (630) raccordant mécaniquement chaque îlot détachable (620) à la plaque métallique de mise à la terre (610), et le moulage non conducteur (740) accouplant mécaniquement chaque îlot détachable (620) à la plaque métallique de mise à la terre (610).

5. Procédé selon la revendication 4, dans lequel chaque îlot détachable (620) est raccordé mécaniquement à la plaque métallique de mise à la terre (610) directement par le biais d'au moins l'un des ponts (630).

6. Procédé selon la revendication 4, dans lequel deux îlots détachables (620) sont raccordés mécaniquement l'un à l'autre par le biais d'au moins un pont (630).

7. Procédé selon l'une quelconque des revendications précédentes, dans lequel la réalisation du corps sous forme de plaque métallique (600) comprend l'utilisation d'un procédé d'emboutissage de métal.

8. Procédé selon l'une quelconque des revendications précédentes, dans lequel la déconnexion électrique comprend l'utilisation d'un procédé de poinçonnage de métal.

9. Appareil de communication (100) comprenant :
a) une antenne (402) ;
b) une carte de circuits imprimés (420) comprenant une section principale (422) et au moins un interrupteur de touche périphérique (424) ;
c) un raidisseur de clavier (410), **caractérisé en ce que** le raidisseur de clavier (410) est adjacent à l'antenne (402), et **en ce qu'**il comprend, en outre :
la carte de circuits imprimés (420) recouvrant le raidisseur de clavier (410), le raidisseur de clavier (410) comprenant :
i) une plaque métallique de mise à la terre (412) placée sous la section principale (422) ;
ii) au moins un îlot métallique (414) situé sous l'au moins un interrupteur de touche périphérique (424), l'au moins un îlot métallique (414) étant situé entre la plaque métallique de mise à la terre (412) et l'antenne (402) ;
l'au moins un îlot métallique (414) flottant électriquement par rapport à la plaque métallique de mise à la terre (412).

10. Appareil de communication (100) selon la revendication 9, comprenant, en outre, un moulage non-conducteur (440) accouplant mécaniquement la plaque métallique de mise à la terre (412) et l'au moins un îlot métallique (414).

11. Appareil de communication (100) selon la revendication 9, comprenant, en outre, un moulage non-conducteur (440) accouplant mécaniquement une pluralité d'îlots métalliques (414) les uns aux autres.
